# EUROPEAN PATENT APPLICATION

(11) **EP 2 700 378 A1**
(43) Date of publication of application: **26.02.2014**
(21) Application number: 12774829.1
(22) Date of filing: 18.04.2012
(51) Int. Cl.: A61C 17/02

(54) **DEVICE FOR WASHING ORAL CAVITY AND METHOD FOR WASHING ORAL CAVITY**

(30) Priority: 22.04.2011 JP 2011095623
(71) Applicant: Tohoku University, Sendai-shi, Miyagi 980-8577 (JP); Showa University, Tokyo 142-8555 (JP)
(72) Inventor: SOYAMA, Hitoshi, Sendai-shi Miyagi 980-8577 (JP); YAMAMOTO, Matsuo, Tokyo 142-8555 (JP); TAKIGUCHI, Takashi, Tokyo 142-8555 (JP)
(74) Representative: Plougmann & Vingtoft A/S
(86) International application number: PCT/JP2012/060411
(87) International publication number: WO 2012/144505

(57) **Abstract**

Provided is a device for cleaning oral cavity and a method for cleaning oral cavity capable of well cleaning stains such as plaque, tartar, and the like even in a narrow portion such as a clearance between teeth, a clearance between implants, and the like. A cover 11 includes a jetting orifice 11a and a discharge orifice 11b and covers a tooth 1 by leaving a clearance between the tooth 1 and the cover 11 so that the clearance can hold water. A jetting unit 12 is mounted in the jetting orifice 11a and includes a flow path 24a communicating with the clearance between the tooth 1 and the cover 11. The jetting unit 12 is configured to generate cavitation bubbles by water flowing toward the clearance in the flow path 24a and jets the cavitation bubbles toward the inside of the cover 11. The flow path 24a includes a small diameter part 24b having a flow path diameter smaller than that on the upstream side and an enlarged part 24c having a flow path diameter larger than that of the small diameter part 24b. A discharge unit 13 discharges water in the clearance between the tooth 1 and the cover 11 from the discharge orifice 11b.

## Description

### Technical Field

The present invention relates to a device for cleaning oral cavity and a method for cleaning oral cavity.

### Background Art

It is known that dental plaque adhering to teeth and implant metal surfaces in the oral cavity is a biofilm where several hundred types of microorganisms live together. In general, to clean plaque and the like adhering to teeth, implants, and the like in the oral cavity, toothbrushing is performed using a toothbrush or an electric toothbrush. However, in reality, there are many patients facing no choice but to undergo tooth extraction due to periodontal disease, and in many cases, a sufficient cleaning effect is not obtained merely by toothbrushing, although it varies between individuals. In particular, in a patient using implants, plaque is likely to adhere thereto, resulting in easily inducing periodontal disease. Further, a habit of periodontal disease prevention such as toothbrushing and the like for removing plaque is not appropriate in many cases. When left neglected, plaque becomes tartar and then periodontal disease and peri-implantitis are worsened. Therefore, stains such as plaque (biofilm) and the like need to be removed or reduced using a cleaning method of some sort.

As a cleaning method for the inside of the oral cavity other than toothbrushing, a cleaning method using a water pick is available. In the water pick, a pulsating flow is jetted from a nozzle having a diameter of about 0.5 mm at a maximum ejection pressure of about 0.6 MPa and thereby, cleaning for a tooth and between teeth can be performed. However, it is difficult to remove plaque. Therefore, as a method capable of removing stains such as plaque, tartar, and the like, a cleaning method by cavitation generated using an ultrasonic transducer and the like has been proposed (for example, see Unexamined Japanese Patent Application Publication No. H07-47088 or Japanese Translation of PCT International Application Publication No. 2008-507327).

Herein, as one cause of tooth staining, there is cited pigmentation due to tannin which is a pigment component contained in coffee, tea, wine, and the like, tobacco tar, and others. To remove such pigmentation, tooth whitening is performed in dentistry. In such tooth whitening performed in dentistry, in general, teeth are brightened and whitened utilizing free radicals such as hydroxyl radicals and the like generated when hydrogen peroxide is decomposed. Further, it has been made clear that hydroxyl radicals are generated by cavitation generated using ultrasound or a venturi tube (for example, see C. Sehgal et al., "Optical-Spectra of Sonoluminescence from Transient and Stable Cavitation in Water Saturated with Various Gases", Journal of Physical Chemistry, 1980, 84, p.388-395 and H. Soyama and T. Muraoka, "Chemical reactor using radical induced by a cavitating jet", Proc. 20th International Conference on Water Jetting, 2010, p.259-267).

### Summary of Invention

### Technical Problem

In a cleaning method utilizing cavitation generated using an ultrasonic transducer and the like as described in Unexamined Japanese Patent Application Publication No. H07-47088 and Japanese Translation of PCT International Application Publication No. 2008-507327, there have been noted problems that since it is difficult to clean a clearance between teeth and a clearance between implants into which the ultrasonic transducer is hard to insert, stains such as plaque, tartar, and the like remain.

The present invention has been achieved by focusing on such problems, and an object of the present invention is to provide a device for cleaning oral cavity and a method for cleaning oral cavity capable of well cleaning stains such as plaque, tartar, and the like even in a narrow portion such as a clearance between teeth, a clearance between implants, and the like.

### Solution to Problem

To achieve the object, a device for cleaning oral cavity according to the present invention includes a cover for covering a tooth by leaving a clearance between the tooth and the cover so as to hold water in the clearance, in which the cover includes a jetting orifice; and a jetting unit for jetting cavitation bubbles toward the inside of the cover, in which the jetting unit includes a flow path communicating with the clearance and is mounted in the jetting orifice so as to generate the cavitation bubbles by water flowing toward the clearance in the flow path.

A method for cleaning oral cavity according to the present invention includes holding water in a clearance between a tooth and a cover by covering the tooth while the cover including a jetting orifice leaves the clearance; and jetting cavitation bubbles toward the inside of the cover using a jetting unit including a flow path communicating with the clearance and being mounted in the jetting orifice so as to generate the cavitation bubbles by water flowing toward the clearance in the flow path.

The method for cleaning oral cavity according to the present invention can be preferably performed using the device for cleaning oral cavity according to the present invention. In the device for cleaning oral cavity and the method for cleaning oral cavity according to the present invention, when water is allowed to flow toward a clearance between a tooth and a cover at a predetermined flow rate in a flow path of a jetting unit, cavitation bubbles can be generated. When the flow rate of water flowing in the flow path is adjusted, cavitation bubbles can be efficiently generated. Then, when the generated cavitation bubbles are jetted to a cleaning portion such as a tooth, an implant, and the like inside the cover, stains adhering to the cleaning portion can be cleaned. At that time, since water is held in the clearance between the tooth and the cover, the cavitation bubbles can be hit against the cleaning portion inside the cover.

In the device for cleaning oral cavity and the method for cleaning oral cavity according to the present invention, since so-called hydrodynamic cavitation where cavitation bubbles are generated by a flow of water is utilized, not only a cleaning effect resulting from cavitation bubbles but also a synergetic effect resulting from an accompanying flow are produced. Therefore, an enhanced cleaning effect is produced as compared with a case cleaning with cavitation bubbles generated using an ultrasonic transducer and the like, and therefore, stains such as plaque, tartar, and the like being hardly cleaned with these can also be cleaned well. Further, since cavitation bubbles can also be allowed to flow into a narrow portion such as a clearance between teeth, a clearance between implants, and the like using a flow of water, stains such as plaque, tartar, and the like can be cleaned even in such a narrow portion.

In this manner, in the device for cleaning oral cavity and the method for cleaning oral cavity according to the present invention, stains such as plaque (biofilm) containing oral microorganisms, tartar, and the like can be well cleaned and therefore, periodontal disease, peri-implantitis, and others can be effectively prevented. Further, since deposited particles on the surface of a tooth can be removed, a tooth whitening effect can be expected. Since free radicals such as hydroxyl radicals and the like are generated by cavitation, a tooth whitening effect obtained using such free radicals can also be expected. The device for cleaning oral cavity and the method for cleaning oral cavity according to the present invention preferably employ a configuration such that the mounting angle of a jetting unit to a cover is variable and the mounting position of the cover can be easily shifted so as to jet cavitation bubbles to any appropriate position inside the cover.

In the device for cleaning oral cavity according to the present invention, the flow path preferably includes a small diameter part having a flow path diameter smaller than that on the upstream side. Further, the flow path preferably includes, downstream from the small diameter part, an enlarged part having a flow path diameter larger than that of the small diameter part. In these cases, cavitation bubbles can be generated in the small diameter part. Further, since the enlarged part is provided downstream from the small diameter part, cavitation bubbles can be efficiently generated even at a low jetting pressure.

The flow path is preferably formed with an inner surface as a smooth curved surface. The small diameter part is preferably disposed so that the flow path diameter gradually decreases from the upstream toward the downstream. Further, the enlarged part is preferably disposed so that the flow path diameter gradually increases from the small diameter part toward the downstream. In these cases, since water smoothly flows in the flow path, cavitation bubbles can be efficiently generated at a small flow rate and a low jetting pressure.

In the device for cleaning oral cavity according to the present invention, the flow path may include, upstream from the small diameter part, a bend part that bends at an angle of 60 to 120 degrees and the bend part includes a water flow adjusting part disposed so as to broaden on a side opposite to the flow path of the upstream side of the bend part. In this case, since the jetting direction of cavitation bubbles is changed by the bend part, molars, implants, and the like at the back of the inside of the oral cavity are easily cleaned. Further, the back sides of teeth and implants are also easily cleaned. Water flowing in the flow path enters the water flow adjusting part in the bend part and then temporarily remains therein. Therefore, even when the flow direction changes in the bend part, a substantially uniform flow toward the small diameter part can be realized and cavitation bubbles can be efficiently generated. The bend part is preferably bent at a desired angle according to a location to be cleaned. Further, the bend part may be configured to be adjustable at any appropriate angle.

In the device for cleaning oral cavity according to the present invention, the cover may include a discharge orifice and a discharge unit for discharging water in the clearance from the discharge orifice. In this case, stains such as plaque, tartar, and the like removed from a tooth, an implant, and the like using cavitation bubbles can be discharged together with water from the clearance between the tooth and the cover using the discharge unit. Therefore, since water in the clearance between the tooth and the cover can be kept clean, a decrease in a cleaning effect using cavitation bubbles due to stains can be prevented. Water discharged using the discharge unit may be disposed of or reused by being returned to the jetting unit. In the case of reusing water, it is preferable to provide a filter part for removing stains from water discharged from the discharge orifice in the discharge unit to circulate water among the jetting unit, the clearance between the tooth and the cover, and the discharge unit.

### Advantageous Effects of Invention

According to the present invention, it is possible to provide a device for cleaning oral cavity and a method for cleaning oral cavity capable of well cleaning stains such as plaque, tartar, and the like even in a narrow portion such as a clearance between teeth, a clearance between implants, and the like.

### Brief Description of Drawings

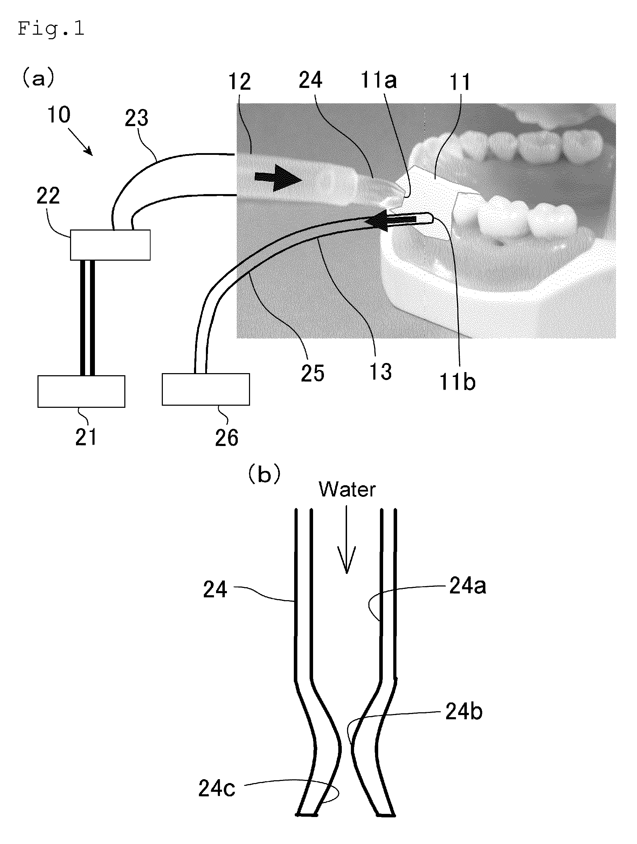

Fig. 1A is a perspective view illustrating a usage state and Fig. 1B is a vertical sectional view illustrating a venturi tube of a device for cleaning oral cavity and a method for cleaning oral cavity of an embodiment of the present invention.

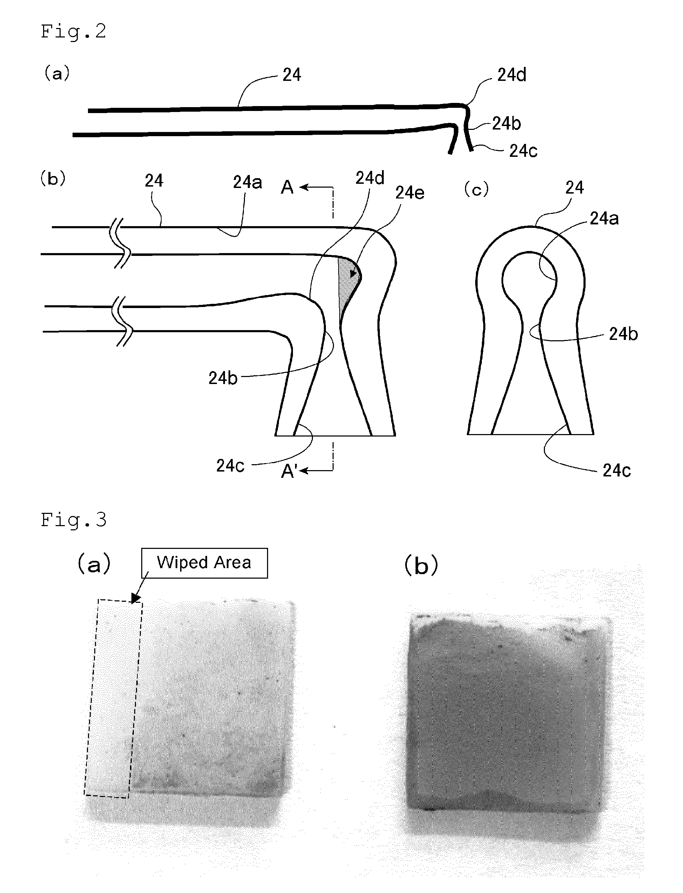

Fig. 2A is an entire side view, Fig. 2B is a vertical sectional view, and Fig. 2C is an A-A' line sectional view each illustrating a modified example of the venturi tube of the device for cleaning oral cavity and the method for cleaning oral cavity of the embodiment of the present invention.
Fig. 3A is an observation view illustrating a result obtained by cleaning, via scanning for several minutes, the entire surface of a dental photocurable resin coated with a dental paint and Fig. 3B is an observation view illustrating a state of coating the dental paint on the dental photocurable resin, using the device for cleaning oral cavity and the method for cleaning oral cavity illustrated in Fig. 1.

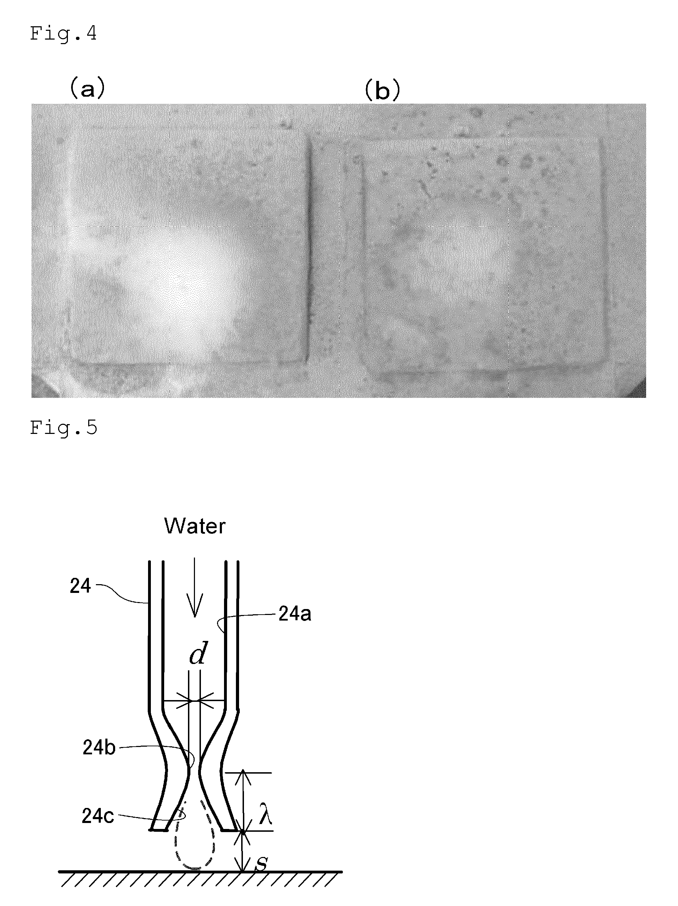

Fig. 4 is an observation view illustrating results obtained by cleaning a predetermined location of the dental photocurable resin coated with the dental paint, in which FIG. 4A illustrates the result of cleaning using the device for cleaning oral cavity and the method for cleaning oral cavity illustrated in Fig. 1 and FIG. 4B illustrates the result of cleaning using a water jet.
Fig. 5 is a vertical sectional view of the vicinity of a venturi tube illustrating an outline of an experiment for examining an optimum shape of the venturi tube of the device for cleaning oral cavity illustrated in Fig. 1.

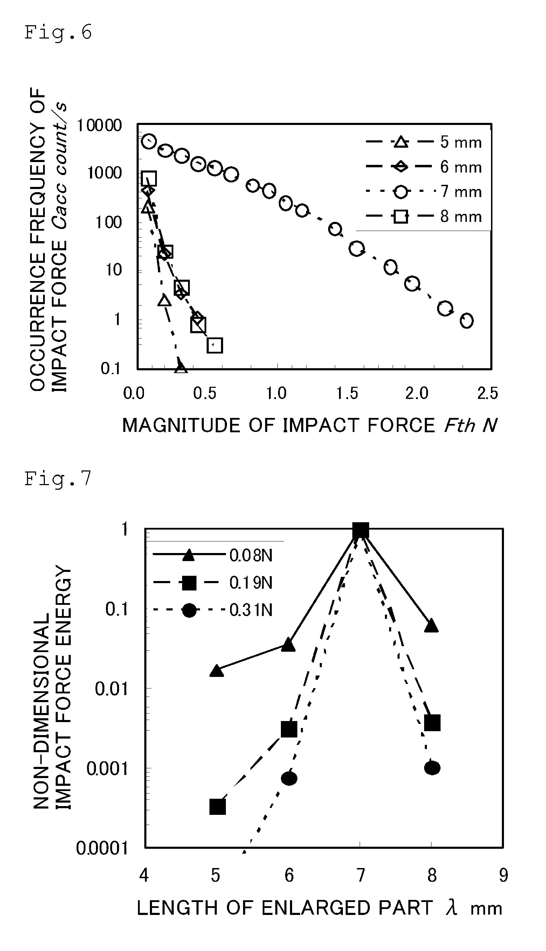

Fig. 6 is a graph illustrating a relationship between the magnitude (threshold value Fₜₕ) of a cavitation impact force and the occurrence frequency of an impact force having a value of at least the threshold value Fₜₕ, according to the experiment of the device for cleaning oral cavity illustrated in Fig. 1.
Fig. 7 is a graph illustrating a relationship between the length λ of an enlarged part of the venturi tube and impact energy determined from the graph illustrated in Fig. 6.

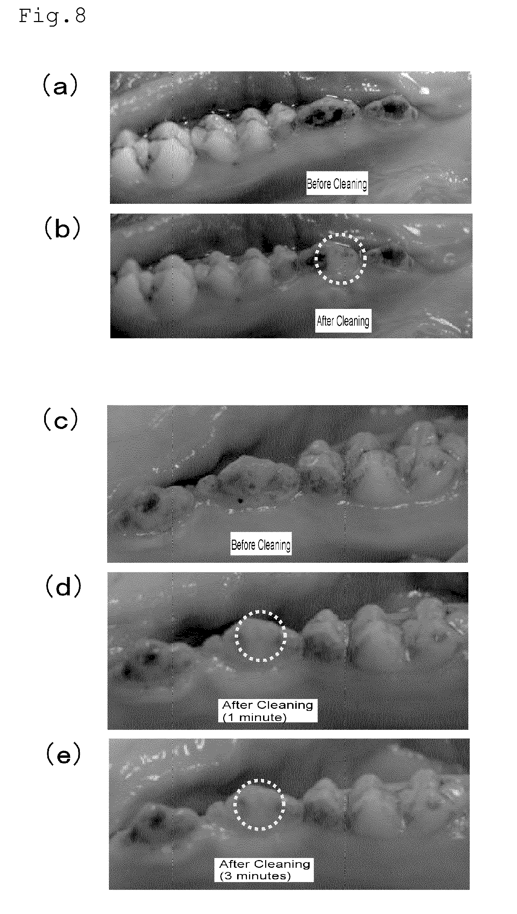

Fig. 8A is a perspective view illustrating a state of a tooth prior to cleaning at the time of cleaning a tooth of the lower jaw of a minipig, Fig. 8B is a perspective view illustrating a state of the tooth after cleaning for 5 minutes therein, Fig. 8C is a perspective view illustrating a state of a tooth prior to cleaning in another location, Fig. 8D is a perspective view illustrating a state of the tooth after cleaning for 1 minute therein, and Fig. 8E is a perspective view illustrating a state of the tooth after cleaning for 3 minutes therein, using the device for cleaning oral cavity and the method for cleaning oral cavity illustrated in Fig. 1.

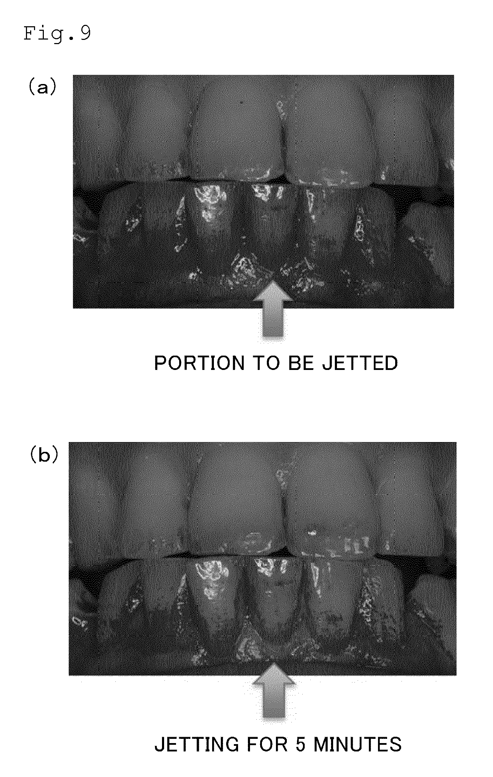

Fig. 9A is a front view illustrating a state of a tooth stained with a plaque cleaning fluid prior to cleaning and Fig. 9B is a front view illustrating a state of the tooth after cleaning for 5 minutes, at the time of cleaning a tooth on the labial side of the lower anterior tooth portion of a human being using the device for cleaning oral cavity and the method for cleaning oral cavity illustrated in Fig. 1.

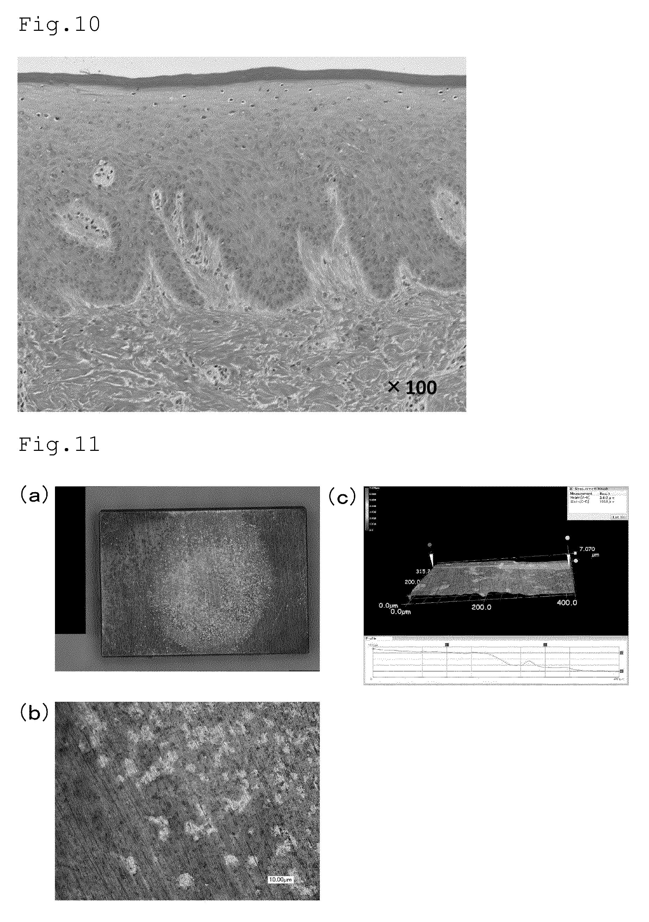

Fig. 10 is a micrograph illustrating tissue of gingival muconsa at an elapsed time of 4 hours after termination of jetting at the time of jetting cavitation bubbles to gingival mucosa of a minipig using the device for cleaning oral cavity and the method for cleaning oral cavity illustrated in Fig. 1.
Fig. 11A is a plan view illustrating a state of a test piece after cleaning at the time of cleaning plaque adhering to the test piece having the same surface properties as a dental implant using the device for cleaning oral cavity and the method for cleaning oral cavity illustrated in Fig. 1, Fig. 11B is a partially enlarged plan view of the test piece, and Fig. 11C includes a perspective view and a cross-sectional view obtained by measuring a state after destroying/removing plaque (biofilm) adhering to the surface of the test piece by a three-dimensional display technique using an all-focused image.

### Description of Embodiments

The embodiment of the present invention will now be described with reference to the accompanying drawings.

Fig. 1 to Fig. 6 illustrate the device for cleaning oral cavity and the method for cleaning oral cavity of the embodiment of the present invention.

As illustrated in Fig. 1, a device 10 for cleaning oral cavity includes a cover 11, a jetting unit 12, and a discharge unit 13.

As illustrated in Fig. 1A, the cover 11 is made of a dental thermoplastic resin and formed so as to cover two to three teeth 1 by leaving a clearance between the teeth 1 and the cover 11. The cover 11 is configured so that the end edge parts thereof on the front side and the back side of the tooth 1 are brought into close contact with gingiva and both end parts thereof along the tooth row are brought into close contact with the tooth crown when covering the tooth 1. Thereby, the cover 11 can hold water in a clearance between the tooth 1 and the cover 11. Further, the cover 11 is easily attached to and detached from any location inside the oral cavity. The cover 11 includes a jetting orifice 11a and a discharge orifice 11b communicating with the clearance between the tooth 1 and the cover 1 when covering the tooth 1.

The jetting unit 12 includes a supply tank 21, a pump 22 connected to the supply tank 21, a tube 23 connected to the pump 22, and a venturi tube 24 mounted in the tip of the tube 23. The supply tank 21 stores water for cleaning the tooth 1. The pump 22 is configured so as to send water stored in the supply tank 21 toward the tube 23. The pump 22 can adjust the pressure of water sent to the tube 23. The tube 23 is made of a soft resin.

The tip of the venturi tube 24 is mounted in the jetting orifice 11a of the cover 11. As illustrated in Fig. 1B, the venturi tube 24 includes a flow path 24a communicating with the interior of the tube 23 and a clearance between the tooth 1 and the cover 11 and thereby water flows in the flow path 24a from the tube 23 toward the clearance between the tooth 1 and the cover 11. The flow path 24a is formed with an inner surface as a smooth curved surface and includes a small diameter part 24b having a flow path diameter smaller than that on the upstream side and an enlarged part 24c having a flow path diameter larger than that of the small diameter part 24b, downstream from the small diameter part 24b. The small diameter part 24b is disposed so that the flow path diameter gradually decreases from the upstream toward the downstream. Further, the enlarged path 24c is disposed so that the flow path diameter gradually increases from the small diameter part 24b toward the downstream. Thereby, the venturi tube 24 can generate cavitation bubbles using water flowing in the flow path 24a. In one specific example, the venturi tube 24 is mounted in the cover 11 using a CADCAM system being established in the dental technical field.

As illustrated in Fig. 1A, the jetting unit 12 is configured so that water in the supply tank 21 is sent toward the tube 23 at a predetermined pressure using the pump 22 and thereby, cavitation bubbles are generated by the venturi tube 24 to be jetted toward the inside of the cover 11. The jetting unit 12 can change the jetting angle of the cavitation bubbles by adjusting the mounting angle of the venturi tube 24 at the jetting orifice 11a.

The discharge unit 13 includes a water discharge pipe 25 and a water discharge tank 26 connected to the water discharge pipe 25. The water discharge pipe 25 is connected to the discharge orifice 11b so as to communicate with a clearance between the tooth 1 and the cover 11. The water discharge tank 26 stores water discharged from the water discharge pipe 25. The discharge unit 13 is configured so as to discharge water in the clearance between the tooth 1 and the cover 11 to the water discharge tank 26 from the discharge orifice 11b through the water discharge pipe 25. Herein, it is possible that the discharge unit 13 includes an aspirator so that water in the clearance between the tooth 1 and the cover 11 is discharged via aspiration from the discharge orifice 11b.

The method for cleaning oral cavity of the embodiment of the present invention can be preferably performed using the device 10 for cleaning oral cavity. As illustrated in Fig. 1A, in the method for cleaning oral cavity of the embodiment of the present invention, firstly, the tooth 1 to be cleaned is covered with the cover 11 and then water is allowed to flow into a clearance between the tooth 1 and the cover 11. At that time, since the end edge parts on the front side and the back side of the cover 11 are brought into close contact with gingiva and both end parts thereof along the tooth row are brought into close contact with the tooth crown, water can be held in the clearance between the tooth 1 and the cover 11.

In this state, water in the supply tank 21 is sent toward the tube 23 at a predetermined pressure using the pump 22 and allowed to flow in the flow path 24a of the venturi tube 24 at a predetermined flow rate. Pressure is controlled using the pump 22 to adjust the flow rate of water flowing in the flow path 24a so that cavitation bubbles can be generated in the small diameter part 24b of the flow path 24a. The thus-generated cavitation bubbles are jetted toward a cleaning portion such as the tooth 1, an implant, and the like inside the cover 11 and thereby, stains adhering to the cleaning portion can be cleaned. At that time, since water is held in the clearance between the tooth 1 and the cover 11, cavitation bubbles can be hit against the cleaning portion inside the cover 11.

Since water is supplied to the clearance between the tooth 1 and the cover 11 from the jetting unit 12, the same amount of water as the supplied water is discharged from the discharge orifice 11b to the water discharge tank 26 through the water discharge pipe 25. Thereby, stains such as plaque, tartar, and the like removed from the tooth 1, the implant, and the like using cavitation bubbles can be discharged, together with water, from the clearance between the tooth 1 and the cover 11. Therefore, water in the clearance between the tooth 1 and the cover 11 can be kept clean and a decrease in a cleaning effect using cavitation bubbles due to stains can be prevented.

In the device 10 for cleaning oral cavity and the method for cleaning oral cavity of the embodiment of the present invention, since so-called hydrodynamic cavitation where cavitation bubbles are generated by a flow of water is utilized, not only a cleaning effect obtained with cavitation bubbles but also a synergetic effect obtained with an accompanying flow are produced. Therefore, an enhanced cleaning effect is produced as compared with a case cleaning with cavitation bubbles generated using an ultrasonic transducer and the like, and therefore, stains such as plaque, tartar, and the like being hardly cleaned with these can also be cleaned well.

Further, when the cover 11 is mounted in a desired location inside the oral cavity and the mounting angle of the venturi tube 24 is adjusted to change the jetting angle of cavitation bubbles, cavitation bubbles can be jetted to any appropriate location inside the cover 11, and also using a flow of water, cavitation bubbles can be allowed to flow into a narrow portion such as a clearance between teeth 1, a clearance between implants, and the like. Therefore, cavitation bubbles can be easily jetted toward a narrow portion such as a clearance between the teeth 1, a clearance between implants, and the like, a heavily stained portion such as with plaque, tartar, and the like, and others. As a result, stains such as plaque, tartar, and the like can be efficiently cleaned.

In this manner, in the device 10 for cleaning oral cavity and the method for cleaning oral cavity of the embodiment of the present invention, stains such as plaque (biofilm) containing oral microorganisms, tartar, and the like can be well cleaned, and periodontal disease, peri-implantitis, and others can be effectively prevented. Further, since deposited particles on the surface of the tooth 1 can be removed, a whitening effect of the tooth 1 can be expected. Since free radicals such as hydroxyl radicals and the like are generated by cavitation, a whitening effect of the tooth 1 using free radicals can also be expected. When the cover 11 is not mounted inside the oral cavity but used as a container, for example, a removed tooth, a removed implant, and the like can be cleaned by being placed in the cover 11.

In the device 10 for cleaning oral cavity and the method for cleaning oral cavity of the embodiment of the present invention, since the enlarged part 24c is provided downstream from the small diameter part 24b of the flow path 24a, cavitation bubbles can be efficiently generated even at a low jetting pressure. Further, since the flow path 24a is formed with an inner surface as a smooth curved surface, water can smoothly flow in the flow path 24a and cavitation bubbles can be efficiently generated at a smaller flow rate and a lower jetting pressure.

Herein, by integrating the supply tank 21 of the jetting unit 12 and the water discharge tank 26 of the discharge unit 13 and disposing a filter part for removing stains from water discharged from the discharge orifice 11b in the discharge unit 13, water may be circulated among the jetting unit 12, a clearance between the tooth 1 and the cover 11, and the discharge unit 13.

Further, as illustrated in Fig. 2, the venturi tube 24 may include, upstream from the small diameter part 24b, a bend part 24d that bends at an angle of 60 to 120 degrees and the bend part 24d may include a water flow adjusting part 24e disposed so as to broaden on a side opposite to the flow path 24a of the upstream side of the bend part 24b. In this case, since the jetting direction of cavitation bubbles is changed by the bend part 24d, molars, implants, and the like at the back inside the oral cavity are easily cleaned. Further, the back sides of teeth and implants are also easily cleaned. Water flowing in the flow path enters the water flow adjusting part 24e in the bend part 24d and then temporarily remains therein. Therefore, even when the flow direction changes in the bend part 24d, a substantially uniform flow toward the small diameter part 24b can be realized and cavitation bubbles can be efficiently generated. Herein, in one specific example illustrated in Fig. 2, the bend part 24d is bent at about 90 degrees.

### Example 1

To verify a cleaning effect according to the device 10 for cleaning oral cavity and the method for cleaning oral cavity of the embodiment of the present invention, the surface of a dental photocurable resin was coated with a dental paint for confirming a dental bite, and then this paint was cleaned. The inner diameter of the small diameter part 24b of the venturi tube 24 was set to be 0.5 mm and the jetting pressure was set to be 0.5 MPa to clean the paint. A state of coating the dental paint on the surface of the dental photocurable resin, a result obtained by cleaning, via scanning for several minutes, the entire surface of the dental photocurable resin, and a result obtained by jetting onto a fixed cleaning location for 10 seconds are illustrated in Fig. 3B, Fig. 3A, and Fig. 4A, respectively. Further, for comparison, a result obtained by jetting onto a fixed cleaning location for 10 seconds using a water jet having a nozzle diameter of 0.5 mm at a jetting pressure of 0.5 MPa is illustrated in Fig. 4B.

As illustrated in Fig. 3, according to the device 10 for cleaning oral cavity and the method for cleaning oral cavity of the embodiment of the present invention, the entire surface of the dental photocurable resin was able to be well cleaned to the same extent as in an area where the paint was wiped off and thereby the cleaning effect was confirmed to be high. Further, as illustrated in Fig. 4, cleaning under the same conditions confirmed that a cleaning effect higher than that with the water jet was obtained.

### Example 2

An experiment for examining an optimum shape of the venturi tube 24 was conducted. As illustrated in Fig. 5, to examine an optimum length λ of the enlarged part 24c relative to the inner diameter d of the small diameter part 24b, cavitation bubbles generated from the venturi tube 24 were jetted onto a polymer piezoelectric film sensor formed of a PVDF (polyvinylidene fluoride) sensor to measure cavitation impact force energy using a cavitation impact counter.

Under conditions of a jetting pressure p₁ = 0.5 MPa, a diameter d of the small diameter part 24b = 0.5 mm, and a stand-off distance s from the tip of the venturi tube 24 to the PVDF sensor = 0.5 mm, the length λ of the enlarged part 24c was set to be 5, 6, 7, and 8 mm to measure the magnitude (threshold value Fₜₕ) of a cavitation impact force and the occurrence frequency of an impact force being at least the threshold value Fₜₕ. These results are illustrated in Fig. 6. As illustrated in Fig. 6, the results clearly confirmed that a large impact force was generated in the case of λ = 7 mm and a high occurrence frequency was also obtained.

The relationship between the length λ of the enlarged part 24c and impact energy with respect to each of the threshold value (Fₜₕ = 0.08 N, 0.19 N, and 0.31 N) was determined from the results illustrated in Fig. 6 and the obtained results are illustrated in Fig. 7. Herein, the impact energy is a value at λ = 7 mm where the maximum value is indicated and non-dimensional. As illustrated in Fig. 7, the results clearly confirmed that with respect to every threshold value, the impact energy at λ = 7 mm had a maximum value and was at least ten times larger than in the cases of λ = 6 mm and 8 mm.

Therefrom, it is understood that in the case of a jetting pressure P₁ of 0.5 MPa, an optimum cleaning effect can be obtained when the length λ of the enlarged part 24c is set to be about 14 times the diameter d of the small diameter part 24b. Further, it is conceivable that in the case of a jetting pressure P₁ of less than 0.5 MPa, since cavitation length decreases, the length λ of the enlarged part 24c needs to be smaller than 14 times the diameter d of the small diameter part 24b, and in the case of a jetting pressure P₁ of more than 0.5 MPa, since the cavitation length increases, the length λ of the enlarged part 24c needs to be larger than 14 times the diameter d of the small diameter part 24b.

### Example 3

To verify a cleaning effect according to the device 10 for cleaning oral cavity and the method for cleaning oral cavity of the embodiment of the present invention, plaque (tartar) adhering to a tooth of the lower jaw of a minipig kept in a freezer was cleaned. The inner diameter of the small diameter part 24b of the venturi tube 24, the jetting pressure, and the stand-off distance were set to be 0.5 mm, 0.5 MPa, and 2 mm, respectively. A state of a tooth prior to cleaning and a state of the tooth after cleaning for 5 minutes are illustrated in Fig. 8A and Fig. 8B, respectively. Further, in another location, a state of a tooth prior to cleaning, a state of the tooth after cleaning for 1 minute, and a state of the tooth after cleaning for 3 minutes are illustrated in Fig. 8C, Fig. 8D, and Fig. 8E, respectively.

As illustrated in Fig. 8, cleaning for 1 to 5 minutes was able to well clean the plaque (tartar) adhering to the tooth, and the cleaning effect according to the device 10 for cleaning oral cavity and the method for cleaning oral cavity of the embodiment of the present invention was confirmed to be high.

### Example 4

To verify a cleaning effect according to the device 10 for cleaning oral cavity and the method for cleaning oral cavity of the embodiment of the present invention, plaque adhering to the surface of a tooth on the labial side of the lower anterior tooth portion of a human being was cleaned. The inner diameter of the small diameter part 24b of the venturi tube 24, the jetting pressure, and the stand-off distance were set to be 0.5 mm, 0.5 MPa, and 2 mm, respectively. A state of a tooth stained red with a plaque cleaning fluid prior to cleaning so as to recognize a portion to which plaque adheres and a state of the tooth after cleaning for 5 minutes are illustrated in Fig. 9A and Fig. 9B, respectively. The jetting location of cavitation bubbles is indicated by an arrow in Fig. 9.

As illustrated in Fig. 9A, the results confirmed that plaque adhering to the tooth was well cleaned and the device 10 for cleaning oral cavity and the method for cleaning oral cavity of the embodiment of the present invention was effective for plaque removal.

### Example 5

To confirm tissue damage effects caused by jetting cavitation bubbles according to the device 10 for cleaning oral cavity and the method for cleaning oral cavity of the embodiment of the present invention, cavitation bubbles were jetted onto gingival mucosa of a minipig. The inner diameter of the small diameter part 24b of the venturi tube 24, the jetting pressure, and the stand-off distance were set to be 0.5 mm, 0.5 MPa, and 2 mm, respectively, and jetting was performed for 3 minutes. Tissue of the gingival mucosa at an elapsed time of 4 hours after termination of jetting is illustrated in Fig. 10. As illustrated in Fig. 10, neither neutrophil invasion in the epidermis nor mononuclear cell invasion in a specific layer was observed and no acute inflammatory reaction such as hydrops and the like was observed, either. Therefrom, it can be judged that there is no detrimental action against gingival tissue caused by the device 10 for cleaning oral cavity and the method for cleaning oral cavity of the embodiment of the present invention.

### Example 6

To verify a cleaning effect according to the device 10 for cleaning oral cavity and the method for cleaning oral cavity of the embodiment of the present invention, plaque adhering to a test piece having the same surface properties as a dental implant (made of titanium) was cleaned. In this test, firstly, the test piece was fixed to an attachable/detachable denture-shaped device and held in a human oral cavity for 3 days to form plaque on the surface of the test piece. The test piece was removed from the oral cavity and cleaned for 5 minutes using the device 10 for cleaning oral cavity and the method for cleaning oral cavity of the embodiment of the present invention. At that time, the inner diameter of the small diameter part 24b of the venturi tube 24, the jetting pressure, and the stand-off distance were set to be 0.5 mm, 0.5 MPa, and 2 mm, respectively. After cleaning, staining was performed with a plaque staining fluid and then observation was conducted using a digital microscope.

A state of the test piece after cleaning, a partial enlargement of the test piece, and a surface configuration where a state after destroying/removing plaque (biofilm) adhering to the surface of the test piece was measured by a three-dimensional display technique using an all-focused image are illustrated in Fig. 11A, Fig. 11B, and Fig. 11C, respectively. As illustrated in Fig. 11, the plaque was confirmed to be separated and removed in a spotted manner in an area where cavitation bubbles were jetted from the venturi tube 24. Further, the plaque (biofilm) having a thickness of about 8 µm was separated and then the metal surface was confirmed to be exposed in a spotted manner. In this manner, the device 10 for cleaning oral cavity and the method for cleaning oral cavity of the embodiment of the present invention were confirmed to be also effective for plaque removal of dental implants.

### Reference Signs List

1: Tooth
10: Device for cleaning oral cavity
11: Cover
   11a: Jetting orifice
   11b: Discharge orifice
12: Jetting unit
   21: Supply tank
   22: Pump
   23: Tube
   24: Venturi tube
      24a: Flow path
      24b: Small diameter part
      24c: Enlarged part
13: Discharge unit
   25: Water discharge pipe
   26: Water discharge tank

## Claims

1. A device for cleaning oral cavity comprising:
a cover for covering a tooth by leaving a clearance between the tooth and the cover so as to hold water in the clearance, the cover including a jetting orifice; and
a jetting unit for jetting cavitation bubbles toward inside of the cover, the jetting unit including a flow path communicating with the clearance and being mounted in the jetting orifice so as to generate the cavitation bubbles by water flowing toward the clearance in the flow path.

2. The device for cleaning oral cavity according to claim 1, wherein the flow path comprises a small diameter part having a flow path diameter smaller than that of an upstream side.

3. The device for cleaning oral cavity according to claim 2, wherein the flow path comprises an enlarged part having a flow path diameter larger than that of the small diameter part on a downstream side from the small diameter part.

4. The device for cleaning oral cavity according to claim 2 or 3, wherein the flow path comprises a bend part bending at an angle of 60 to 120 degrees on an upstream side from the small diameter part, the bend part including a water flow adjusting part broadening on a side opposite to a flow path of an upstream side of the bend part.

5. The device for cleaning oral cavity according to any one of claims 1 to 4, wherein
the cover comprises a discharge orifice, and
a discharge unit for discharging water in the clearance from the discharge orifice.

6. A method for cleaning oral cavity comprising:
holding water in a clearance between a tooth and a cover by covering the tooth while the cover including a jetting orifice leaves the clearance; and
jetting cavitation bubbles toward inside of the cover using a jetting unit including a flow path communicating with the clearance and being mounted in the jetting orifice so as to generate the cavitation bubbles by water flowing toward the clearance in the flow path.
